# EUROPÄISCHE PATENTANMELDUNG

(11) **EP 1 538 719 A2**
(43) Veröffentlichungstag der Anmeldung: **08.06.2005**
(21) Anmeldenummer: 04026662.9
(22) Anmeldetag: 10.11.2004
(51) Int. Cl.: H02G 3/18, H02G 3/14

(54) **Anschlussmodul für die Unterflurverkabelung von Telekommunikations- bzw. Datenleitungen**

(30) Priorität: 06.12.2003 DE 20318953 U
(71) Anmelder: Tehalit GmbH, 67716 Heltersberg (DE)
(72) Erfinder: Kauf, Peter, 66482 Zweibrücken (DE); Schneckmann, Horst, 67705 Trippstadt (DE); Szabo, Thomas, 66849 Landstuhl (DE)
(74) Vertreter: Patentanwälte Möll und Bitterich

(57) **Zusammenfassung**

Gegenstand der Erfindung ist ein Anschlussmodul (10) für die Unterflur-Verkabelung von Telekommunikations- bzw. Datenleitungen (1). Das Modul besitzt eine etwa rechteckige Frontfläche (11) mit vorbereiteten Ausschnitten für die Steckdosen (20). Die Steckdosen (20) sind von hinten in die Ausschnitte eingesteckt. Sind auf der Rückseite der Steckdosen ebenfalls Steckbuchsen zum Anstecken von konfektionierten Telekommunikations- bzw. Datenkabeln (1) vorgesehen, kann die komplette Unterflur-Verkabelung auf der Baustelle in kürzester Zeit und von Hilfspersonal vorgenommen werden.

## Beschreibung

Die Erfindung betrifft Anschlussmodule für die Unterflurverkabelung von Telekommunikations- bzw. Datenleitungen gemäß dem Oberbegriff des Anspruchs 1.

Beim Neubau von Wohn- und Bürogebäuden wird zunächst der Rohbau erstellt, bestehend aus Wänden, Decken und Böden. Anschließend folgt der Innenausbau. Dazu gehören die Installationsarbeiten für Heizung, Wasser, Elektro usw. Ein Teil der Versorgungsleitungen wird auf dem Rohboden verlegt, bevor Bodendämmung und Estrich eingebracht werden. Speziell für Bürogebäude mit Doppelboden gibt es Unterflur-Installationssysteme, die im Doppelboden verlegt werden. An bestimmten Stellen werden im Doppelboden Anschlussboxen eingesetzt, die mit einer trittfesten Klappe verschlossen werden können. Hinter der Klappe sind Steckdosen, Sicherungen usw. geschützt untergebracht. Dieses Installationssystem erlaubt es, die Anschlussboxen innerhalb des Fußbodenrasters beliebig zu versetzen, weil die Kabel und Leitungen im Zwischenboden völlig frei verlegt sind.

Aus der DE 202 04 093 U ist ein Anschlusssystem für Unterflur-Verkabelungen von Telekommunikations- und Datennetzen bekannt. In einem Unterflurtank sind Becher eingesetzt, die einen langgestreckten, quaderförmigen Aufnahmeraum aufweisen. An den Längswänden des Aufnahmeraums sind in einem Raster vertikale Führungen angeordnet. In diese Führungen sind Modulträger einsetzbar, die die eigentlichen Anschlussmodule aufnehmen. Diese Module umfassen Datensteckdosen, die auf ihrer dem Benutzer zugewandten Vorderseite genormte Steckbuchsen und auf ihrer Rückseite Anschlussvorrichtungen für die Enden von Daten- und Telekommunikationskabeln besitzen. Zwecks verbesserter Zugänglichkeit stehen die frontseitigen Steckbuchsen in einem Winkel von ca. 45 Grad zur Frontfläche.

Aus der EP 1 191 656 A ist eine weitere Geräteaufnahme für eine Unterflurgerätedose bekannt. Die Geräteaufnahme besitzt eine rahmenförmig umlaufende Wandung mit Führungen und einem Befestigungsrahmen zum Schrägeinbau von Verbindern. Oberhalb der Verbinder sind eine Haube mit einer Aussparung und ein Träger mit Führungen vorgesehen, wobei der Befestigungsrahmen in einer die Aussparung wenigstens teilweise abdeckenden Weise an der Haube befestigbar ist. Die Haube ist in die Führungen des Trägers einschiebbar und mit diesem verrastbar.

Nachteilig an diesen Unterflur-Anschlussvorrichtungen für Telekommunikations- und Datenleitungen ist die Vielzahl von Einzelelementen, aus denen sie zusammengesetzt sind. Ein weitaus größerer Nachteil aller handelsüblicher Unterflur-Anschlussmodule ist dadurch begründet, dass das Anschließen der Leitungsenden an die jeweiligen Steckdosen nur vom Fachmann durchgeführt werden darf. Auch ist das Anschließen der Leitungsenden selbst trotz Verwendung vorgefertigter Anschlussteile und trotz Verwendung von Spezialwerkzeug zeitaufwändig und fehleranfällig. Das ist unbefriedigend.

Der vorliegenden Erfindung liegt daher die Aufgabe zugrunde, Anschlussmodule der eingangs genannten Art anzugeben, die erheblich einfacher und schneller konfektioniert und vor allem auch von Hilfspersonal angeschlossen werden können.

Diese Aufgabe wird gelöst durch Anschlussmodule mit den Merkmalen des Anspruchs 1.

Der wesentliche Vorteil der vorliegenden Erfindung ist der geringe Zeitbedarf bei der Montage und die Möglichkeit, die Montage von Hilfskräften durchführen zu lassen. Zu diesem Zweck werden Datensteckdosen eingesetzt, die sich von hinten an die Frontfläche des in den Unterflurtank einzusetzenden Anschlussmoduls aufrasten lassen. Eine weitere Besonderheit der erfindungsgemäß verwendeten Datensteckdosen besteht darin, dass sie nicht nur frontseitig sondern auch rückseitig genormte Steckbuchsen besitzen. Dadurch kann die Unterflurverkabelung mittels vorkonfektionierter Leitungen durchgeführt werden, die das Montagepersonal nur noch anstecken muss. Vorkonfektionierte Telekommunikations- und Datenleitungen sind werksseitig geprüft. Abisolieren und Kontaktieren auf der Baustelle und dadurch bedingte Montagefehler scheiden völlig aus.

Ein weiterer Vorteil der vorliegenden Erfindung besteht darin, dass die verwendeten Steckdosen allseitig gekapselt und isoliert sind. Maßnahmen für eine zusätzliche Isolierung in Form von Schürzen und dergleichen, wie sei beim Stand der Technik verwendet werden, können entfallen.

Gemäß einer Ausgestaltung der Erfindung besitzt die Frontfläche vorbereitete Ausschnitte für die Telekommunikations- bzw. Datensteckdosen. Diese werden nur geöffnet, wenn sie benötigt werden.

Vorteilhafterweise stehen die frontseitigen Steckbuchsen in einem Winkel von ca. 45 Grad zur Frontfläche. Dies verbindet eine gute Raumausnützung mit einer guten Zugänglichkeit.

Vorteilhafterweise stehen die rückseitigen Steckbuchsen in einem Winkel von ca. 30 Grad zur Frontfläche. Auch dies verbindet einen noch geringeren Platzbedarf mit einer noch ausreichenden Zugänglichkeit während der Montage.

Anhand der Zeichnung soll die Erfindung in Form eines Ausführungsbeispiels näher erläutert werden. Es zeigen jeweils als Schrägansicht
- Fig. 1: die Vorderseite eines Anschlussmoduls für die Unterflur-Verkabelung von Telekommunikations- bzw. Datenleitungen,
- Fig. 2: die Rückseite des Anschlussmoduls der Fig. 1,
- Fig. 3: die Rückseite eines weiteren Anschlussmoduls und
- Fig. 4: die Rückseite eines dritten Anschlussmoduls.

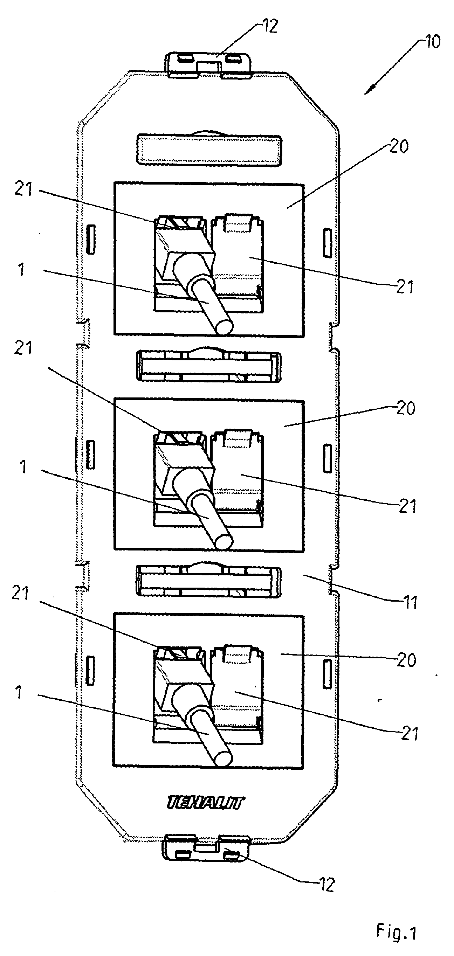

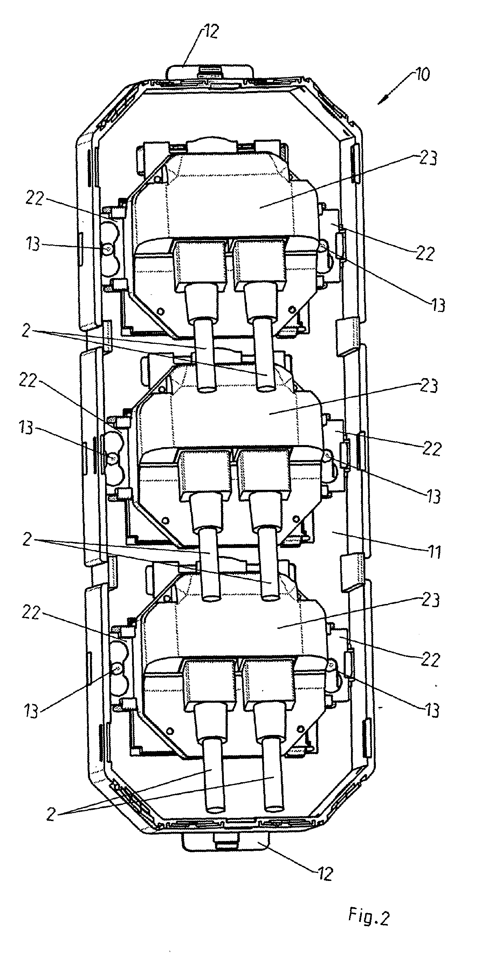

Fig. 1 als Ansicht der Vorderseite und Fig. 2 als Ansicht der Rückseite zeigen ein Anschlussmodul 10 für die Unterflur-Verkabelung von Telekommunikations- bzw. Datenleitungen 1, 2. Man erkennt eine etwa rechteckige Frontfläche 11 mit Rasthaken 12 an den Stirnseiten zur höhenverstellbaren Befestigung in einer handelsüblichen Unterflur-Gerätedose (nicht dargestellt). Die Frontfläche 11 besitzt drei Ausschnitte, in die von hinten jeweils eine Telekommunikations- bzw. Datensteckdose 20 eingesetzt ist.

Wie Fig. 2 erkennen lässt, besitzt die Frontfläche 11 auf ihrer Rückseite geeignete Haltepins 13, die mit entsprechenden Haltevorrichtungen 22 an den Steckdosen 20 kooperieren.

Die Steckdosen 20 des vorliegenden Ausführungsbeispiels besitzen jeweils zwei frontseitige Steckbuchsen, in die jeweils eine Telekommunikations- bzw. Datenleitung 1 mit fabrikseitig ankonfektioniertem Stecker eingesteckt werden kann. Die nicht benutzten Steckbuchsen sind durch eine Klappe 21 verschlossen.

Fig. 2 zeigt, dass die Steckdosen 20 auch rückseitig durch Telekommunikations- bzw. Datenleitungen 2 mit ankonfektionierten Steckern kontaktiert werden. Dazu besitzen die Steckdosen 20 auch rückseitig genormte Steckbuchsen 23. Dadurch ist es möglich, dass die komplette Unterflurverkabelung mit Hilfe der vorkonfektionierten Leitungen 2 in kürzester Zeit und von Hilfspersonal ausgeführt werden kann.

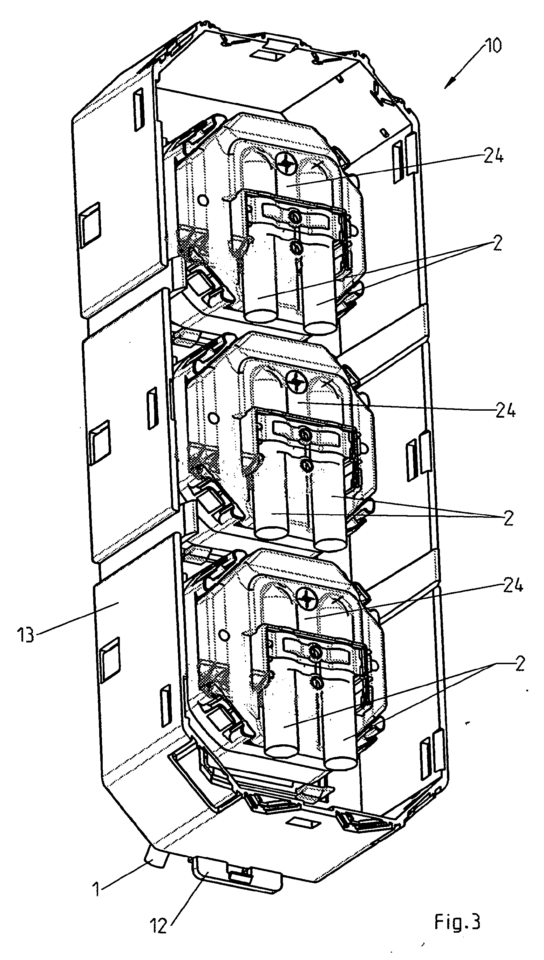

Fig. 3 zeigt eine Schrägansicht der Rückseite eines zweiten Anschlussmoduls. Jede Datensteckdose 20 ist mit zwei herkömmlichen Kabelanschlüssen 24 ausgerüstet, die im vorliegenden Beispiel parallel zur Frontfläche 11 liegen.

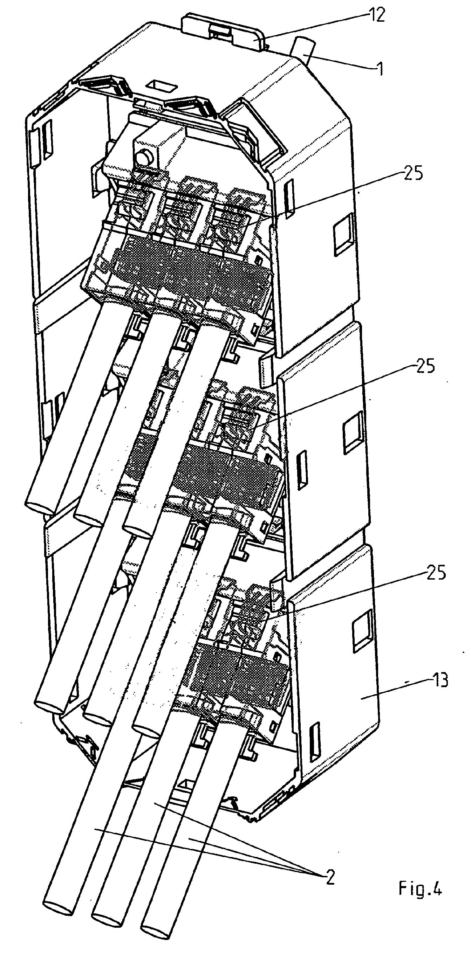

Fig. 4 zeigt eine Schrägansicht der Rückseite eines dritten Anschlussmoduls. Jede Datensteckdose 20 ist mit drei handelsüblichen Kabelanschlüssen (25) ausgerüstet, die im vorliegenden Beispiel im Winkel von ca. 30 Grad zur Frontfläche 11 liegen.

Zum Schutz der handelsüblichen Kabelanschlüsse 24, 25 ist an der Frontfläche 11 eine umlaufende Schürze 13 angebracht.

## Patentansprüche

1. Anschlussmodul (10) für die Unterflur-Verkabelung von Telekommunikations- bzw. Datenleitungen (1, 2), im wesentlichen umfassend
- eine etwa rechteckige Frontfläche (11),
- Rasthaken (12) an den Stirnseiten der Frontfläche (11) zur höhenverstellbaren Befestigung in einer Unterflur-Gerätedose,
- und wenigstens eine Telekommunikations- bzw. Datensteckdose (20), aufgerastet auf die Frontfläche (11, 12),
**gekennzeichnet durch** die Merkmale:
- die Frontfläche (11) besitzt vorbereitete Ausschnitte für die Steckdosen (20),
- die Steckdose (20) ist von hinten in die Ausschnitte der Frontfläche (11) eingerastet.

2. Anschlussmodul nach Anspruch 1, **gekennzeichnet durch** das Merkmal:
- die Telekommunikations- bzw. Datensteckdose (20) besitzt auch auf ihrer Rückseite Steckbuchsen (23) zum Anstecken von konfektionierten Telekommunikations- bzw. Datenkabeln (2).

3. Anschlussmodul nach einem der Ansprüche 1 oder 2, **gekennzeichnet durch** das Merkmal:
- die frontseitigen Steckbuchsen stehen in einem Winkel von ca. 45 Grad zur Frontfläche (11).

4. Anschlussmodul nach einem der Ansprüche 1 bis 3, **gekennzeichnet durch** das Merkmal:
- die rückseitigen Steckbuchsen (23) stehen in einem Winkel von ca. 30 Grad zur Frontfläche (11).

5. Anschlussmodul nach Anspruch 1, **gekennzeichnet durch** das Merkmal:
- die Telekommunikations- bzw. Datensteckdose (20) besitzt auf ihrer Rückseite Kabelanschlüsse (24).

6. Anschlussmodul nach Anspruch 5, **gekennzeichnet durch** das Merkmal:
- die Kabelanschlüsse (24) stehen in einem Winkel von ca. 30 Grad zur Frontfläche (11).

7. Anschlussmodul nach Anspruch 5 oder 6, **gekennzeichnet durch** das Merkmal:
- an der Frontfläche (11) ist eine umlaufende Schürze (13) angebracht.
